# EUROPÄISCHE PATENTSCHRIFT

(11) **EP 2 400 229 B1**
(45) Veröffentlichungstag und Bekanntmachung des Hinweises auf die Patenterteilung: **19.10.2022**
(21) Anmeldenummer: 11005144.8
(22) Anmeldetag: 24.06.2011
(51) Int. Cl.: F24D 19/10, F25B 30/02, F25B 13/00

(54) **VERFAHREN ZUM STEUERN EINER WÄRMEPUMPENEINHEIT UND WÄRMEPUMPENEINHEIT**
METHOD FOR OPERATING A HEAT PUMP UNIT AND HEAT PUMP UNIT
PROCÉDÉ DESTINÉ À LA COMMANDE D'UNE UNITÉ DE POMPE À CHALEUR ET UNITÉ DE POMPE À CHALEUR

(30) Priorität: 24.06.2010 DE 102010024986
(43) Veröffentlichungstag der Anmeldung: 28.12.2011
(73) Patentinhaber: Stiebel Eltron GmbH & Co. KG, 37603 Holzminden (DE)
(72) Erfinder: SCHAUMLÖFFEL, Michael, 37671 Höxter (DE); SMOLLICH, Steffen, 37603 Holzminden (DE); SCHIEFELBEIN, Kai, Dr., 37671 Höxter (DE); BRUGMANN, Johannes, Dr., 37671 Höxter (DE)
(74) Vertreter: Eisenführ Speiser

(56) Entgegenhaltungen:
- EP-A1- 1 646 831
- EP-A1- 2 009 370
- EP-B1- 1 646 831
- WO-A2-2005/103586
- US-A1- 2003 213 256

## Beschreibung

Die vorliegende Erfindung betrifft ein Verfahren zum Steuern einer Wärmepumpeneinheit sowie eine Wärmepumpeneinheit.

Aus WO 2005 1035868 A2 geht eine Wärmepumpe hervor, die als Wärmequelle Luft verwendet. Die Wärmepumpe ist zur Beheizung von Gebäuden geeignet und weist einen geschlossenen Wärmepumpenkreislauf auf, in dem ein Arbeitsfluid zirkuliert. Die Einrichtung weist einen Lufttemperatursensor auf, um die Umgebung bzw. Außentemperatur zu messen. Mit einer Kontrolleinrichtung wird abhängig von der Umgebungstemperatur die induzierte Heizleistung gesteuert.

US 2003 213 256 A1 beschreibt einen Kältemittelkreislauf, insbesondere einen Kältemittelkreislauf mit einem linearen Kolbenkompressor. Dabei wird eine Umgebungstemperatur von einem außen angebrachten Wärmeaustauscher überwacht und es wird der Volumenstrom des Kältemittels, welches aktuell zirkuliert, gemessen. Über einen Inverter wird der Kompressor mit Gleichstrom versorgt, wobei der Inverter entsprechend einer Abweichung von einem Sollvolumenstrom geregelt ist.

Eine Wärmepumpe verwendet die beispielsweise in der Außenluft vorhandene Energie (temperaturabhängig) dazu, beispielsweise kaltes Wasser zu Heizzwecken oder als Warmwasser zu erwärmen. Je höher die Außentemperatur, desto mehr Wärmeleistung wird von der Wärmepumpe bereitgestellt.

Es ist eine Aufgabe der vorliegenden Erfindung, ein Verfahren zum Steuern einer Wärmepumpe sowie eine Wärmepumpeneinheit vorzusehen, welche eine verbesserte Anpassung der Wärmeleistung einer Wärmepumpeneinheit bei einer gegebene^n Außentemperatur ermöglicht.

Diese Aufgabe wird durch ein Verfahren zum Steuern einer Wärmepumpeneinheit gemäß Anspruch 1 sowie eine Wärmepumpeneinheit gemäß Anspruch 3 gelöst.

Somit wird ein Verfahren zum Steuern einer Wärmepumpeneinheit vorgesehen. Die Wärmepumpeneinheit weist einen Verflüssiger, einen Verdichter, einen Verdampfer und ein elektronisches Expansionsventil auf. Die Außentemperatur wird bestimmt und die Wärmepumpeneinheit wird in einer ersten Betriebsart betrieben, wenn die Außentemperatur unter einem ersten Grenzwert ist. Die Wärmepumpeneinheit wird in einer zweiten Betriebsart betrieben, wenn die Außentemperatur oberhalb des ersten Grenzwertes ist. In der zweiten Betriebsart wird eine Drehzahl des Lüfters des Verdampfers oder eine Drehzahl des Verdichters reduziert und das elektronische Expansionsventil wird derart gesteuert, dass ein geringerer Massestrom in dem Kältemittelkreislauf vorhanden ist.

Gemäß einem Aspekt der vorliegenden Erfindung wird die Drehzahl des Lüfters des Verdampfers oder die Drehzahl des Verdichters und/oder das elektronische Expansionsventil weiter derart gesteuert, dass der Massenstrom in dem Kältemittelkreislauf geringer wird, wenn die Außentemperatur oberhalb eines zweiten Grenzwertes ist.

Die Erfindung betrifft ebenfalls eine Wärmepumpeneinheit mit einem Verflüssiger, einem Verdichter, einem Verdampfer, einem elektronischen Expansionsventil und einer Steuereinheit zum Steuern des Betriebs der Wärmepumpeneinheit. Die Steuereinheit ist dazu ausgestaltet, die Drehzahl des Verdichters oder die Drehzahl des Lüfters des Verdampfers zu reduzieren und das elektronische Expansionsventil derart zu steuern, dass ein geringer Massestrom in dem Kältemittelkreislauf vorhanden ist, wenn die Außentemperatur oberhalb eines ersten Grenzwertes ist.

Die Erfindung betrifft den Gedanken, die Außentemperatur zu bestimmen und die Leistung der Wärmepumpeneinheit zu reduzieren, wenn die Außentemperatur oberhalb eines Grenzwertes ist. Dies kann durch Reduzierung der Drehzahl der Lüfter des Verdampfers oder Verflüssigers (weniger Luftdurchsatz), durch Steuern des Expansionsventils (weniger Massestromkreislauf) erfolgen. Insbesondere kann eine Reduzierung der Drehzahl des Verdichters erfolgen. Weitere Ausgestaltungen der Erfindung sind Gegenstand der Unteransprüche.

Vorteile und Ausführungsbeispiele der Erfindung werden nachstehend unter Bezugnahme auf die Zeichnung näher beschrieben.

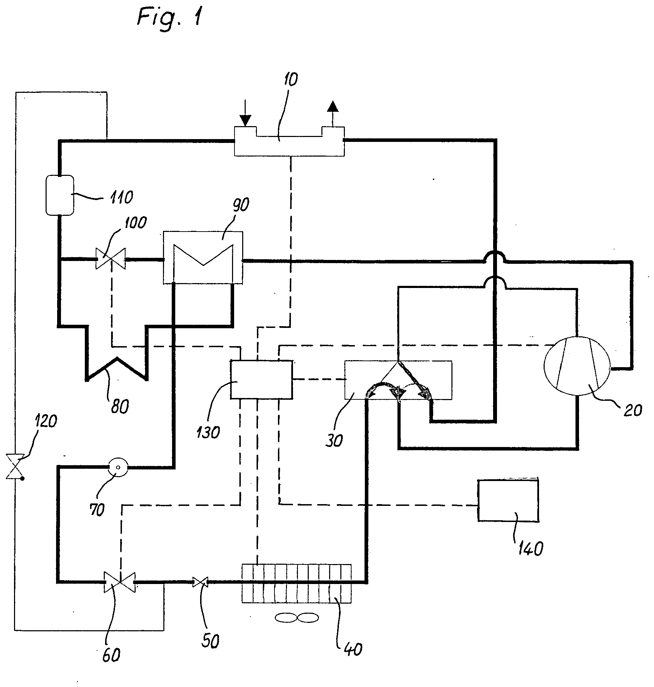

- Fig. 1: zeigt eine schematische Darstellung einer Wärmepumpeneinheit gemäß einem ersten Ausführungsbeispiel.

Fig. 1 zeigt eine schematische Darstellung einer Wärmepumpeneinheit gemäß einem ersten Ausführungsbeispiel. Die Wärmepumpeneinheit weist einen Verflüssiger 10, einen Verdichter 20, ein 4-2-Wege Ventil 30, einen Verdampfer 40, optional eine Einspritzkapillare 50, ein elektronisches Expansionsventil 60, optional ein Schauglas 70, optional eine Abtauschlange 80, optional einen Economizer 90, optional ein elektronisches Expansionsventil 100, optional einen Filtertrockner 110 sowie optional ein weiteres elektronisches Expansionsventil 120 auf. Des Weiteren weist die Wärmepumpeneinheit eine Steuereinheit 130 auf, welche beispielsweise mit dem Verflüssiger 10, dem Verdichter 20, dem 4-2-Wege Ventil 30, dem Verdampfer 40, dem elektronischen Expansionsventil 60 und dem elektronischen Expansionsventil 100 gekoppelt sein kann. Die Drehzahl des Lüfters des, des Verdampfers 40 sowie die Drehzahl des Verdichters 20 kann durch die Steuereinheit 130 gesteuert bzw. geregelt werden.

Optional kann der Verdichter 20 eine Zwischeneinspritzung aufweisen, welche mit dem Ausgang des Economizers 90 gekoppelt ist.

Die Wärmepumpeneinheit kann mit einem Temperatursensor 140 gekoppelt sein, der die Außentemperatur bestimmt. Die Steuereinheit 130 kann die Drehzahl des Lüfter des Verdampfers 40 sowie die Drehzahl des Verdichters 20 in Abhängigkeit der durch den Temperatursensor 140 gemessenen Außentemperatur beeinflussen.

Daher wird in einer ersten Betriebsart (Außentemperatur unterhalb eines Grenzwertes) die Wärmepumpeneinheit in einem Normalbetrieb betrieben. Wenn jedoch die Außentemperatur über den Grenzwert ansteigt, dann wird die Wärmepumpeneinheit mittels der Steuereinheit 130 in eine zweite Betriebsart geschaltet. In der zweiten Betriebsart kann die Drehzahl des Verdichters 20 oder die die Drehzahl des Lüfters des Verdampfers 40 reduziert werden. Damit kann ein geringer Luftdurchsatz ermöglicht werden, was zu einer Reduzierung der Heizleistung führen kann.

Zusätzlich wird das elektronische Expansionsventil 60 durch die Steuereinheit 130 derart gesteuert, dass der Massestrom in dem Kältekreislauf reduziert wird. Dies führt ebenfalls zu einer reduzierten Heizleistung.

Bei einem ungeregelten Verdichter steigt die Heizleistung einer Wärmepumpe mit der Außentemperatur an. Mit steigender Heizleistung sinkt (bei gleicher Heizungsvorlauftemperatur) die max. zu erreichende Wassertemperatur im Warmwasserspeicher. Der Wärmeübertrager im Warmwasserspeicher bleibt gleich, die Heizleistung nimmt zu, daher muss die Temperaturdifferenz zwischen dem Wasser der Wärmepumpe und dem Wasser im Warmwasserspeicher größer werden.

Dieser Nachteil kann gemäß dem erfindungsgemäßen Verfahren und der erfindungsgemäßen Wärmepumpeneinheit behoben werden.

## Patentansprüche

1. Verfahren zum Steuern einer Wärmepumpeneinheit, wobei die Wärmepumpeneinheit einen Verflüssiger (10), einen Verdichter (20), einen Verdampfer (40) und ein elektronisches Expansionsventil (60) aufweist, mit den Schritten:
Bestimmen der Außentemperatur,
Betreiben der Wärmepumpeneinheit in einer ersten Betriebsart, wenn die Außentemperatur unter einem ersten Grenzwert ist,
Betreiben der Wärmepumpeneinheit in einer zweiten Betriebsart, wenn die Außentemperatur oberhalb des ersten Grenzwertes ist, wobei in der zweiten Betriebsart die Heizleistung der Wärmepumpeneinheit reduziert wird, indem die Drehzahl eines Lüfters des Verdampfers (40) oder die Drehzahl des Verdichters (20) reduziert wird und das elektronische Expansionsventil (60) derart gesteuert wird, dass ein geringerer Massestrom in dem Kältemittelkreislauf vorhanden ist.

2. Verfahren nach Anspruch 1, wobei die Drehzahl des Lüfters des Verdampfers (40) oder die Drehzahl des Verdichters (20) weiter reduziert und/oder das elektronische Expansionsventil (60) ferner derart gesteuert wird, dass der Massenstrom in dem Kältemittelkreislauf noch geringer wird, wenn die Außentemperatur oberhalb eines zweiten Grenzwertes ist.

3. Wärmepumpeneinheit, arbeitend nach einem der Verfahren gemäß Anspruch 1 oder 2 mit
einem Verflüssiger (10), einem Verdichter (20), einem Verdampfer (40), einem elektronischen Expansionsventil (60) und einer Steuereinheit (130) zum Steuern des Betriebs der Wärmepumpeneinheit,
wobei die Steuereinheit (130) dazu ausgestaltet ist, die Wärmepumpeneinheit nach dem Verfahren nach einem der Ansprüche 1 oder 2 zu steuern.

## Claims

1. A method of controlling a heat pump unit, the heat pump unit having a condenser (10), a compressor (20), an evaporator (40) and an electronic expansion valve (60), comprising the following steps:
determining the outside temperature,
operating the heat pump unit in a first operating mode when the outside temperature is below a first threshold value,
operating the heat pump unit in a second operating mode when the outside temperature is above the first threshold value, wherein, in the second operating mode, the heating output of the heat pump unit is reduced by reducing the speed of a fan of the evaporator (40) or the speed of the compressor (20) and controlling the electronic expansion valve (60) such that a lower mass flow is present within the refrigerant circuit.

2. The method according to claim 1, wherein the speed of the fan of the evaporator (40) or the speed of the compressor (20) is further reduced and/or the electronic expansion valve (60) is further controlled such that the mass flow within the refrigerant circuit is reduced even further when the outside temperature is above a second threshold value.

3. A heat pump unit operating according to one of the methods according to claim 1 or 2, comprising
a condenser (10), a compressor (20), an evaporator (40), an electronic expansion valve (60) and a control unit (130) for controlling the operation of the heat pump unit,
wherein the control unit (130) is configured to control the heat pump unit according to the method according to one of claims 1 or 2.

## Revendications

1. Procédé destiné à la commande d'une unité de pompe à chaleur, l'unité de pompe à chaleur comportant un condenseur (10), un compresseur (20), un évaporateur (40) et un détendeur électronique (60), comprenant les étapes suivantes :
détermination de la température extérieure,
mise en fonctionnement de l'unité de pompe à chaleur dans un premier mode de fonctionnement quand la température extérieure est inférieure à une première valeur limite,
mise en fonctionnement de l'unité de pompe à chaleur dans un second mode de fonctionnement quand la température extérieure est supérieure à la première valeur limite, la puissance calorifique de l'unité de pompe à chaleur étant réduite dans le second mode de fonctionnement sous l'effet d'une réduction de la vitesse de rotation d'un ventilateur de l'évaporateur (40) ou de la vitesse de rotation du compresseur (20) et le détendeur électronique (60) étant commandé de telle manière que le débit massique dans le circuit frigorifique est plus faible.

2. Procédé selon la revendication 1, dans lequel la vitesse de rotation du ventilateur de l'évaporateur (40) ou la vitesse de rotation du compresseur (20) est réduite davantage et/ou le détendeur électronique (60) est en outre commandé de telle manière que le débit massique dans le circuit frigorifique devient encore plus faible quand la température extérieure est supérieure à une seconde valeur limite.

3. Unité de pompe à chaleur, fonctionnant conformément à un des procédés selon la revendication 1 ou 2, comportant
un condenseur (10), un compresseur (20), un évaporateur (40), un détendeur électronique (60) et une unité de commande (130) destinée à commander le fonctionnement de l'unité de pompe à chaleur,
l'unité de commande (130) étant conçue pour commander l'unité de pompe à chaleur conformément au procédé selon l'une des revendications 1 ou 2.
